# EUROPÄISCHE PATENTSCHRIFT

(11) **EP 1 046 832 B1**
(45) Veröffentlichungstag und Bekanntmachung des Hinweises auf die Patenterteilung: **27.10.2004**
(21) Anmeldenummer: 00108361.7
(22) Anmeldetag: 17.04.2000
(51) Int. Cl.: F16F 1/387

(54) **Spannbuchse und ihre Verwendung in Windkraftanlagen**
Bearing bush and use thereof in wind turbines
Douille de serrage et son application dans des éoliennes

(30) Priorität: 22.04.1999 DE 19918379
(43) Veröffentlichungstag der Anmeldung: 25.10.2000
(73) Patentinhaber: Mitsch, Franz, 64646 Heppenheim (DE)
(72) Erfinder: Mitsch, Franz, 64646 Heppenheim (DE)
(74) Vertreter: Benz, Jürgen, Dr.

(56) Entgegenhaltungen:
- DE-A- 1 955 308
- GB-A- 818 850
- US-A- 2 126 707
- US-A- 3 235 941
- US-A- 3 881 711
- US-A- 4 419 398

## Beschreibung

Die Erfindung betrifft Lager- bzw. Spannbuchsen, die aufgrund ihrer besonderen konstruktiven Merkmale radial verspannt werden können. Dadurch werden Vorteile in bezug auf Montage und Demontage dieser Buchsen in Maschinenteilen, insbesondere Getriebelagern schwerer Maschinen erzielt. Die erfindungsgemäßen Spannbuchsen sind vor allem für den Einsatz in Lagern vorgesehen, die große durch Bewegungen und / oder Schwingungen erzeugte Kräfte aufnehmen und ausgleichen müssen. Derartige Spannbuchsen sind somit bevorzugt für den Einbau in Windkraftanlagen geeignet.

Windkraftanlagen besitzen, wie in der Regel jedes angetriebene System, Lager zwischen den angetriebenen Bauteilen (Motor/Getriebe) und den statischen Bauteilen (z.B. Gehäuse). An die Lager von Windkraftanlagen sind dabei besondere Anforderungen zu stellen. Die Lager müssen nämlich im besonderen Maße hohen und unterschiedlich gerichteten Kräften standhalten. Durch die Unregelmäßigkeiten des Windes hinsichtlich seiner Stärke und Richtung, die sich innerhalb kurzer Zeit ändern können, treten permanent Kräfte unterschiedlicher Stärke in Zug-, Druck- und Querrichtung auf, die um so größer sind, je stärker die Windkraft und je größer die Windkraftanlage ist. Bei Stürmen oder Orkanen müssen Windkraftanlagen sogar extremen Belastungen standhalten. Die Bauteile müssen dabei die Beanspruchungen über eine lange Betriebszeit unbeschädigt aushalten. Die Lager von Windkraftanlagen haben überdies die Aufgabe, die durch die einwirkenden Kräfte bedingten und durch Schwingungen der Anlage erzeugte Geräusche abzuschwächen.

Die Antriebswelle von Windkraftanlagen ist hohen Kräften und Drehmomenten ausgesetzt, welche von den Rotorblättern auf sie übertragen werden. Damit die Antriebswelle, sowie die mit ihr verbundenen Teile keine übermäßige Materialermüdung erleiden und zerstört werden, muß sie entsprechend gelagert sein. Die Lager müssen dabei die besagten Kräfte und Momente aufnehmen und nach Möglichkeit neutralisieren bzw. ausgleichen. Die Lager müssen Kräfte in radialer z-y-Richtung übertragen und in axialer x-Richtung möglichst weich sein, um das am Stehlager vorhandene Lagerspiel ohne große Rückstellkräfte ausgleichen zu können. Häufig werden Dreipunktlagerungen verwendet.

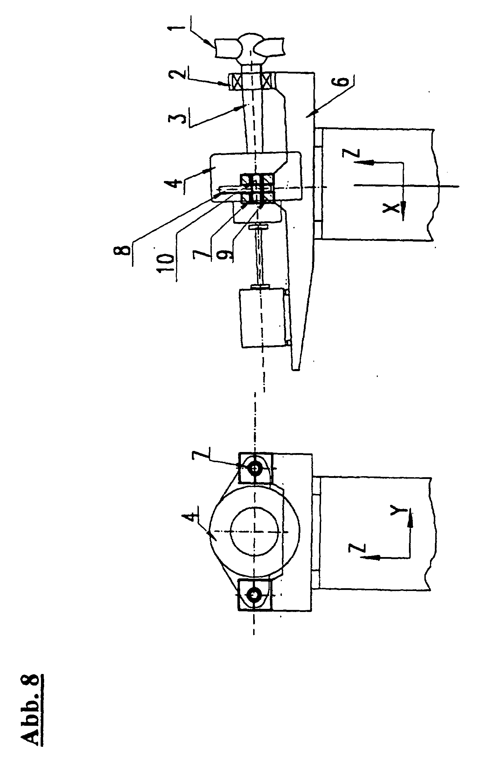

Eine typische moderne Dreipunktlagerung des Standes der Technik ist in Abb. 8 dargestellt: Die den Rotor (1) tragende Welle (3) läuft durch das Stehlager (2) und mündet in dem Getriebe (4). Der Getriebeblock (4) ist mittels der Getriebe-Drehmomentstützen (8) beidseitig des Getriebeblocks mit dem Maschinenträger verbunden. In der Regel ist eine Drehmomentstütze auf jeder Seite vorhanden. Die Drehmomentstützen weisen an ihren Enden Bohrungen auf. In diesen Bohrungen befinden sich die eigentlichen Spannbuchsen (7) durch diese wiederum die Achse 10 geführt ist. Die Achse ist wiederum an zwei Ständern (9) befestigt. Während die Spannbuchse im Auge der Getriebe Drehmomentstütze ruht, lagert die Achse (10) im zylindrischen Hohlraum der Buchse. Die Buchse selbst ist aus Materialien gefertigt, die auch elastische Eigenschaften aufweisen und so in der Lage sind, die genannten Kräfte und Momente auszugleichen und abzufedern.
Die Buchsen werden als nicht geteilte Vollbuchsen in die mit Bohrungen (Augen) versehenen Ständer axial eingepreßt oder auch in Form von geteilten Buchsen in horizontal geteilten Ständern radial verspannt.
Aus der DE OS 1 955 308 sind Buchsen bekannt, welche aus konzentrischen gummibeschichteten Halbschalen bestehen und für den Einsatz als Federelement bzw. als Gelenkbuchse mit extrem großen Ausschlagwinkel in leichteren Fahrzeugen Verwendung finden können.

Da, wie erwähnt, die Lager starke Kräfte ausgleichen müssen, sind sie trotz moderner Materialien und Bautechniken einem beträchtlichen Verschleiß ausgesetzt. Es muß davon ausgegangen werden, daß die Buchsen während der Lebensdauer von 20 Jahren zumindest einmal ausgewechselt werden müssen. Dazu müssen die abgenutzten Buchsen unter erheblichen Aufwand ausgepreßt und die neuen Buchsen entsprechend in das Lagerauge neu eingepreßt werden.
Für diese Tätigkeiten des Ein- und Ausbaus neuer und gebrauchter Spannbuchsen ist in der Regel schweres Gerät notwendig, das auf den Turm der Windkraftanlage transportiert werden muß. Oft muß dabei auch die komplette Gondel vom Turm entfernt und wieder aufgesetzt werden.

Es bestand also daher die Aufgabe, Spannbuchsen, insbesondere für den Einsatz in Windkraftanlagen oder ähnlichen angetriebenen Systemen zur Verfügung zu stellen, welche aufgrund ihrer konstruktiven Konzeption, die genannten Probleme nicht mehr aufweisen.

Die Aufgabe wurde gelöst durch Spannbuchsen, die eine geteilte Konstruktion aufweisen und somit im geschlossenen Lagerauge auf einfache Art radial verspannt werden und somit die an sie gestellten Anforderungen erfüllen können.

Gegenstand der Erfindung ist somit eine radial verspannbare Spannbuchse (7), bestehend aus einer unteren (11) und einer oberen (12) zylindrischen Halbschale, die, aufeinanderliegend, eine zylindrische Vollschale mit einem zylindrischen Hohlraum zur Aufnahme der Spannbuchsenachse (10) bilden, wobei jede Halbschale (11), (12) zusammengesetzt ist aus einer äußeren Halbbuchse (16), einer inneren Halbbuchse (15), und die Zwischenräume zwischen den besagten Halbbuchsen weitestgehend mit Elastomermaterial (13), (14) von gleich oder verschieden dicken Schichten ausgefüllt sind, die dadurch gekennzeichnet ist, daß der Mittelpunkt des Radius (20) der inneren Halbbuchse jeder Halbschale identisch ist mit dem Mittelpunkt des Radius der Buchsenachse (10), und der Mittelpunkt des Radius der besagten äußeren Halbbuchse (21) jeder Halbschale exzentrisch versetzt ist entlang der senkrecht zur Berührungsfläche der beiden Halbschalen gedachten Achse (32), wodurch der Mittelpunktversatz der entsprechenden Radien von der inneren zur äußeren Halbbuchse jeder Halbschale zunimmt und bezüglich zur jeweils anderen Halbschale entgegengesetzt ist, so daß der Durchmesser (31) und die Schalendicke (26) der Spannbuchse in Richtung der Achse (32) größer ist als der Durchmesser (30) und die Schalendicke (25) der Spannbuchse senkrecht zu dieser Achse.

In der einfachsten Ausführungsform besteht jede Halbschale (11), (12) der erfindungsgemäßen Spannbuchse (7) aus einer äußeren und einer inneren Halbbuchse (16), (15), welche zwischen sich eine Elastomerenschicht aufweisen. In einer bevorzugten Ausführungsform befindet sich zwischen den genannten Halbbuchsen eine weitere Zwischenhalbbuchse (17), wobei die Zwischräume jeweils weitestgehend mit Elastomermaterial ausgefüllt sind. Prinzipiell lassen sich noch weiter Zwischenbuchsen, bzw. Zwischenschichten einfügen. Hierdurch kann die Härte bzw. Steifigkeit und Verspannbarkeit der Spannbuchse variiert werden.
Eine Ausführungsform befriftt eine entsprechende Spannbuchse, welche dadurch gekennzeichnet ist, daß sie zusätzlich eine oder mehrere Halbbuchsen (17) in jeder Halbschale aufweist, die zwischen der besagten oberen und unteren zylindrischen Halbschale angebracht sind, wobei die Zwischenräume zwischen den besagten Buchsen weitestgehend mit besagtem Elastomermaterial ausgefüllt sind, und der Mittelpunkt des Radius der besagten Zwischenhalbbuchsen (17) analog Anspruch 1 exzentrisch versetzt ist.
Es ist auch möglich, daß jede Halbschale eine unterschiedliche Zahl von Halbbuchsen enthält, wodurch sich unterschiedlich steife, bzw. harte Halbschalen ergeben. Dies kann auch erreicht werden, in dem - bei gleicher Anzahl der Halbbuchsen pro Halbschale - Materialien mit unterschiedlichen Eigenschaften in bezug auf Elastizität, Härte und Steifheit in jeder Halbschale eingesetzt werden. Dabei wird die im Betrieb gegebenenfalls stärker belastete Seite der Spannbuchse mit steiferen Eigenschaften versehen als die gegenüberliegende Seite. Somit stellt sich ohne Belastung eine Unsymmetrie in bezug auf die Steifheit der Spannbuchse ein, daß heißt, die Buchsenachse verschiebt sich in Richtung der weicheren Halbschale. Sobald während der Betriebsphase entsprechend nicht-rotationssymmetrische Belastungen und Drehmomente erzeugt werden, nimmt die Achse annähernd wieder ihre zentrische Mittellage ein, so daß dann nur eine geringere Druckverformung der belasteten Seite erfolgt. Dadurch kann bei gleicher Elastomerschichtdicke die Lebensdauer der Spannbuchse deutlich verlängert werden, bzw. es können kleinere Buchsen für die gleiche Lebensdauer eingesetzt werden.

Eine Ausführungsform befriftt eine entsprechende Buchse, die dadurch gekennzeichnet ist, daß die Halbschalen unterschiedlich hart sind.

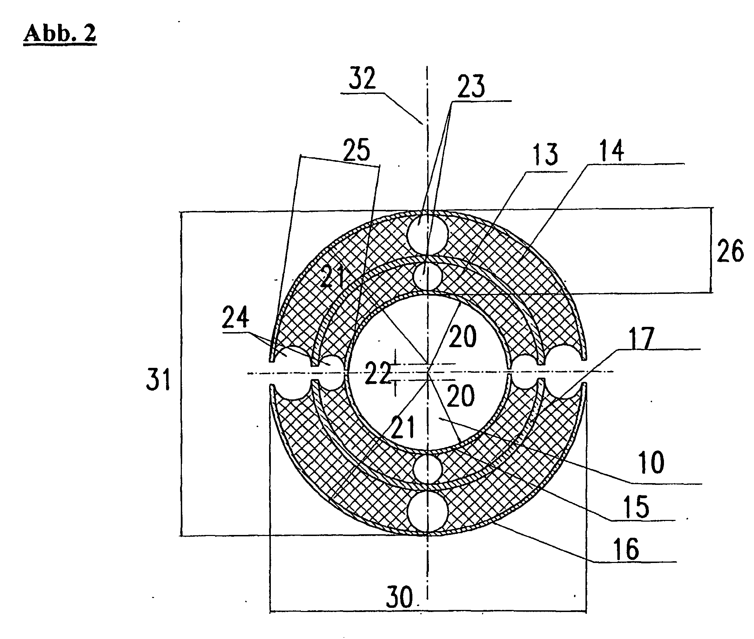

Die Elastomerenschicht zwischen den einzelnen Halbbuchsen ist weitestgehend durchgängig angebracht. Es ist jedoch empfehlenswert an einer oder mehereren Stellen Aussparungen, Fenster oder Hohlräume, vorzugsweise zylindrische Hohlräume längs der Längsachse der Buchse vorzusehen. Dadurch kann das durch die Vorspannung und bei Belastung erzeugte überschüssiges Elastomer in die vorgesehenen Hohlräume gepreßt werden, wodurch diese teilweise oder ganz geschlossen werden. Vorzugsweise befinden sich solche Trennfugenfenster an den Positionen (23) und / oder (24), wie in Abb. 2 dargestellt. Die Trennfugen sind ferner eine weitere Möglichkeit, die Steifheit, bzw. Härte der Buchse zu verändern, bzw. auf die speziellen Erfordernisse abzustimmen, ohne auf andere Elastomermaterialien oder konstruktive Maßnahmen (z.B. unterschiedliche Zahl der Zwischenhalbbuchsen) zurückgreifen zu müssen.

Eine weitere Ausführungsform betrifft eine Spannbuchse, welche Aussparungen bzw. Hohlräume in den elastomeren Schichten (13) (14), insbesondere an den Positionen (23) und / oder (24) aufweisen.

Gegenstand der Erfindung ist auch die Verwendung besagter Spannbuchsen zur Aufnahme von durch Bewegung oder Schwingungen erzeugten Kräften, insbesondere als Maschinenlager, vorzugsweise als Getriebelager für Windkraftanlagen.

Im folgenden werden die Abbildungen und die darin sowie im Text und in den Ansprüchen verwendeten Bezugsgrößen erläutert:
- Abb. 1: zeigt eine Seitenansicht des oberen Teils einer Windkraftanlage inklusive des Getriebeblocks und einer erfindungsgemäßen Lagerung auf dem Maschinenträger. Ferner wird eine Querschnittsansicht (A-B) des Getriebeblocks mit erfindungsgemäßen Spannbuchsen gezeigt.
- Abb. 2: zeigt den Querschnitt einer erfindungsgemäßen Spannbuchse mit einer Zwischenschale und Trennfenstern in der Mitte und an den Enden der Halbschalen.
- Abb. 3: zeigt jeweils zwei Ansichten (Schnitt A-B, C-D) von Schritt 1 und 2 des Einbaus der erfindungsgemäßen Spannbuchse.
- Abb. 4: zeigt jeweils zwei Ansichten (Schnitt A-B, C-D) von Schritt 3 und 4 des Einbaus der erfindungsgemäßen Spannbuchse.
- Abb. 5: zeigt eine Möglichkeit der Montage der erfindungsgemäßen Spannbuchse mittels einer Montagevorrichtung, bei der die Verspannungskraft über ein hydraulisches Hebezeug erzeugt wird.
- Abb. 6: zeigt eine Möglichkeit der Montage der erfindungsgemäßen Spannbuchse mittels einer Montagevorrichtung, bei der die Verspannungskraft über Verschraubungen erzeugt wird.
- Abb. 7: zeigt eine Variante zu Abb. 3 und 4, bei der die Achse direkt aufgeschraubt wird.
- Abb. 8: zeigt eine Seitenansicht des oberen Teils einer Windkraftanlage des Standes der Technik inklusive des Getriebeblocks und einer Lagerung auf dem Maschinenträger sowie deren Querschnittsansicht (A-B).

| | | | |
|---|---|---|---|
| **1** | Rotor | **17** | Zwischenhalbbuchse |
| **2** | Stehlager | **18** | Komplette Buchsenlagerung |
| **3** | Rotorwelle | **19** | Krafteinleitung zur Buchsenvorspannung |
| **4** | Getriebeblock | **20** | Radius der inneren Halbbuchse |
| **5** | Generatorblock | **21** | Radius der äußeren Halbbuchse |
| **6** | Maschinenträger | **22** | Mittelpunktversatz der Halbbuchsen |
| **7** | Spannbuchse | **23** | mittleres Trennfugenfenster |
| **8** | Getriebedrehmomentstütze | **24** | endseitiges Trennfugenfenster |
| **9** | Ständer | **25** | Dicke der Halbschalen endseitig |
| **10** | Spannbuchsenachse | **26** | Dicke der Halbschalen mittig |
| **11** | untere Halbschale | **27** | Verschraubung Ständer |
| **12** | obere Halbschale | **28** | Montageverschraubung |
| **13** | innere Elastomerenschicht | **29** | Montagevorrichtung |
| **14** | äußere Elastomerenschicht | **30** | Durchmesser der unverspannten Buchse |
| **15** | innere Halbbuchse | **31** | Durchmesser der unverspannten Buchse |
| **16** | äußere Halbbuchse | **32** | Achse senkrecht zu Halbschalen |

Abb. 2 zeigt den Querschnitt einer Ausführungsform der erfindungsgemäßen Spannbuchse mit einer Zwischenschale und Aussparungen bzw. Fenstern in der Mitte und an den Enden der Halbschalen in unverspannten Zustand. Die untere Halbschale (11) setzt sich aus einer äußeren Halbbuchse (16), einer inneren Halbbuchse (15) und einer Zwischenhalbbuchse (17) zusammen. Zwischen den Buchsen sind Elastomerschichten (13) und (14) vorgesehen. An den Halbschalenrändern sowie in ihrer Mitte sind Trennfugenfenster vorhanden. Erfindungswesentlich ist nun, daß der Mittelpunkt des Radius (20) der inneren Buchsen (15) einer Halbschale, die das Auge für die Buchsenachse (10) bilden, identisch mit dem Mittelpunkt besagter Buchsenachse ist, während der Mittelpunkt des Radius der Zwischenbuchse um einen bestimmten Betrag versetzt zu besagtem Achsenmittelpunkt entlang einer Achse (32) ist, welche senkrecht zu den Berührungsflächen gedacht ist. Der Mittelpunkt des Radius (21) der äußeren Halbbuchsen (16) der entsprechenden Halbschale ist ebenfalls entlang der gleichen Achse in der gleichen Richtung versetzt und zwar um einen entsprechend größeren Betrag. Hierdurch wird ein Mittelpunktversatz (22) generiert. Die gegenüberliegende Halbschale weist in der gezeigten Abbildung einen Mittelpunktversatz von gleichem Betrag aber in entgegengesetzter Richtung auf. Die Größe des gesamten Mittelpunktversatzes beider Halbschalen der Spannbuchse richtet sich nach der notwendigen Vorspannung, welche sich wiederum nach den erforderlichen elastomeren Eigenschaften der Spannbuchse richtet, die wiederum gemäß der angreifenden Kräfte im Betriebszustand der Anlage auszuwählen sind. Im Ausführungsbeispiel beträgt der gesamte Mittelpunktversatz der Spannbuchse 5 bis 30% der Gesamt-Elastomerdicke der Buchse und entspricht etwa der durch die Vorspannung erzeugten Komprimierung. Als Folge dieses Mittelpunktversatzes ist die Dicke (31) in Richtung der gedachten Achse (32) der Spannbuchse im nicht vorgespannten Zustand größer als die Dicke (30) der Spannbuchse senkrecht zu dieser Achse. Somit entsteht eine schalenförmige Buchse, welche im Umfang eine unterschiedliche Wandstärke (25), (26) besitzt. Dies ist zwingend notwendig, damit die Buchse in die Lagerung eingebaut werden kann. Gleichzeitig ist es erforderlich, daß die Buchsen funktionsgerecht radial verspannt werden, damit bei der im Betrieb üblichen radialen Bewegung der Buchsenachse (10) zum Lagerauge kein Abheben der entlasteten Halbschale erfolgen kann.

Im eingebauten und verspannten Zustand wird die Wandstärke der Schalen im Umfang gezwungenermaßen gleich. Der im Bereich des Mittelfensters (23) überschüssige Elastomer wird beim Vorspannen der Buchse weggepreßt und fließt teilweise in Richtung der Trennfugenfenster (24), so daß auch dort eine radiale Vorspannung der Halbschalen erfolgt. Somit erfolgt durch die Vorspannung der Spannbuchsen in Richtung der senkrechten Achse (32) eine radiale Vorspannug am gesamten Buchsenumfang.

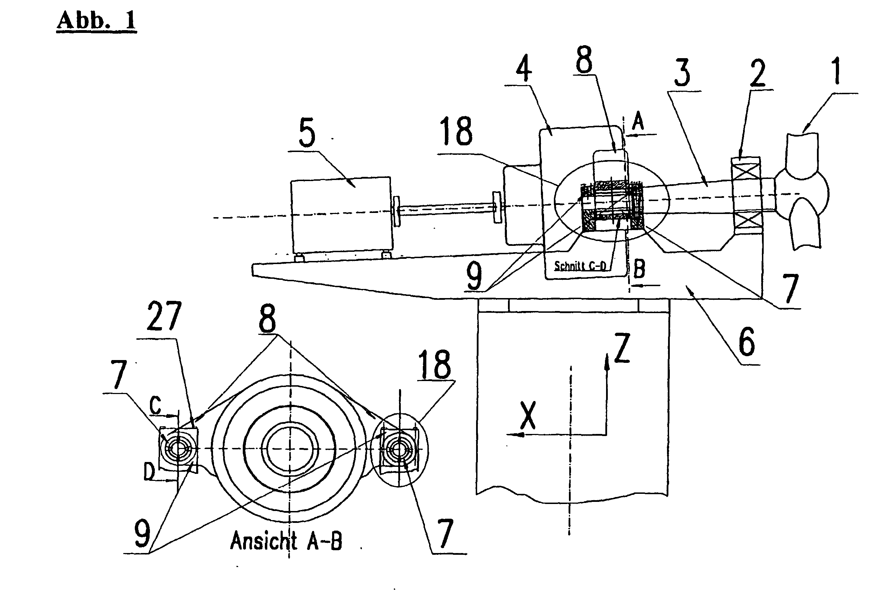

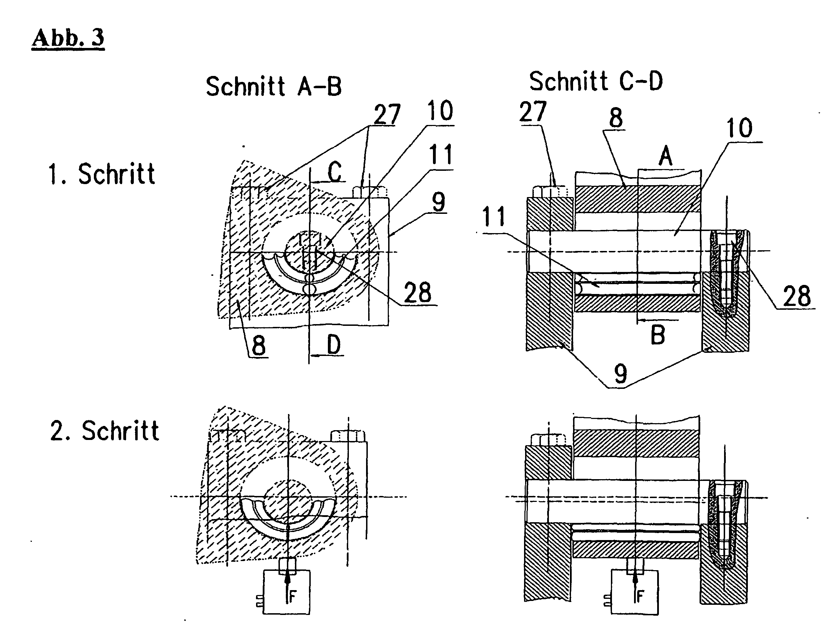

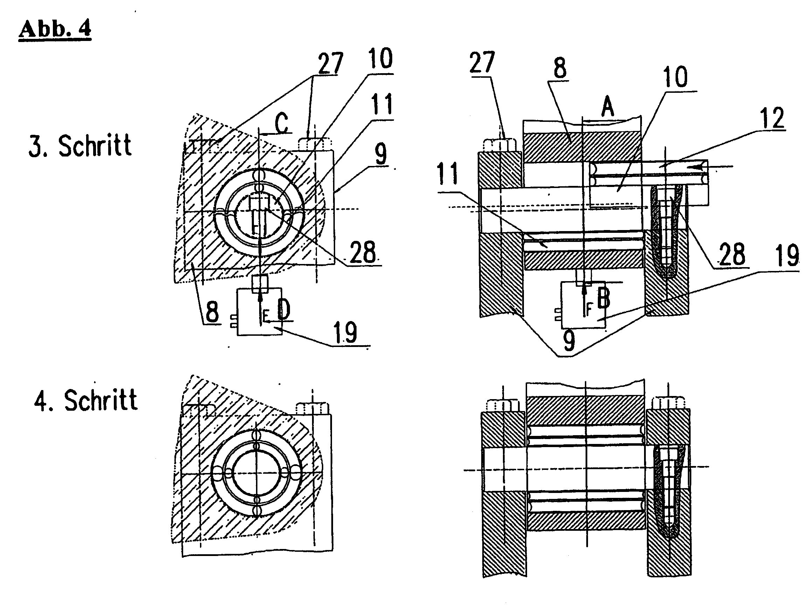

Die erfindungsgemäßen Spannbuchsen können in die Lageraugen der Ständer (9) gemäß der Anordnung in Abb. 1 eingebaut werden. Es ist aber aufgrund der zweiteiligen Anordnung und der Vorspannung möglich, die neuen Spannbuchsen direkt in die in diesem Fall als Lagerauge dienenden Bohrungen der Getriebedrehmomentstützen (8) auf einfache Weise einzubauen. Dies geschieht, wie im anderen Fall durch ein Einbauverfahren, in dem zunächst die eine und später die zweite Halbschale der Spannbuchse eingebracht werden. Die Montage der erfindungsgemäßen Spannbuchsen unter Benutzung der umgebenden Konstruktion erfolgt beispielsweise, wie folgend und gemäß der Abb. 3 und 4 beschrieben, in vier Schritten:
1. Zunächst wird die untere Halbschale (11) und die Buchsenachse (10) eingelegt. Die Achse (10) wird im Ständer (9) verklemmt und / oder kann mit einer in der Achse versenkten Schraube (28) befestigt werden. Wichtig dabei ist, daß zumindest auf einer Seite die obere Achsenhälfte frei ist, damit die obere Halbschale später axial eingeschoben werden kann.
2. Nun wird die untere Halbschale (11) vorgespannt. Dazu wird die Getriebedrehmomentstütze (8) mittels eines vorzugsweise hydraulischen Hebezeugs (19) soweit angehoben, daß die untere Halbschale (11) etwa um den anderthalbfachen bis dreifachen, vorzugsweise doppelten Wert der vorgesehenen Vorspannung durch Zusammendrücken der Elastomerkonstruktion gespannt wird. Die große Vorspannung ist in den selten vorkommenden und nur kurzzeitig wirksamen Montagefällen für die Bauteile erträglich, ohne daß Schäden auftreten. Statt des Einsatzes des schweren, und raumintensiven Hebezeuges (19) kann die erforderliche Vorspannkraft auch nach dem Abstützen der vorher angehobenen Getriebedrehmomentstütze (8) gegenüber den Maschinenträger (6) durch die Befestigungsschrauben (27) und (28) der Buchsenachse (10) aufgebracht werden.
3. Da die untere Halbschale (11) jetzt um etwa das doppelte Vorspannmaß gedrückt ist, kann die obere Halbschale (12) ohne Kraftaufwand axial in das Lagerauge eingeschoben werden.
4. Nachdem beide Halbschalen eingebracht sind, kann die untere, ursprünglich etwa doppelt so stark vorgespannte Halbschale entlastet werden. Die Vorspannung verteilt sich dadurch gleichmäßig auf die beiden Halbschalen. Bei Bedarf kann die Achse (10) jetzt auf der für das Einführen der oberen Halbschale zuvor freien Seite mit einer für den Dauerbetrieb ausreichenden Verschraubung befestigt werden.
Die Demontage der Halbschalen beim Erneuem der Spannbuchsen erfolgt in umgekehrter Reihenfolge.

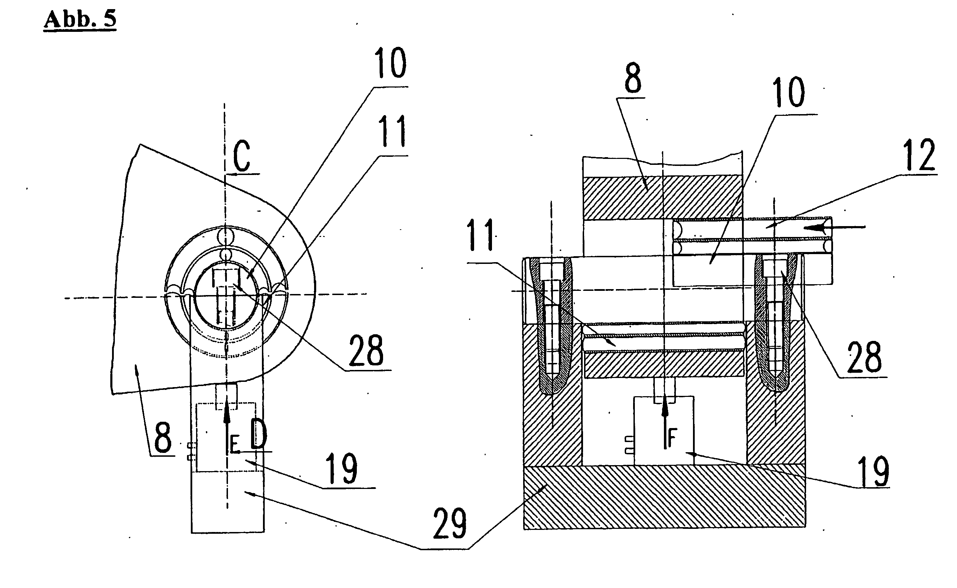

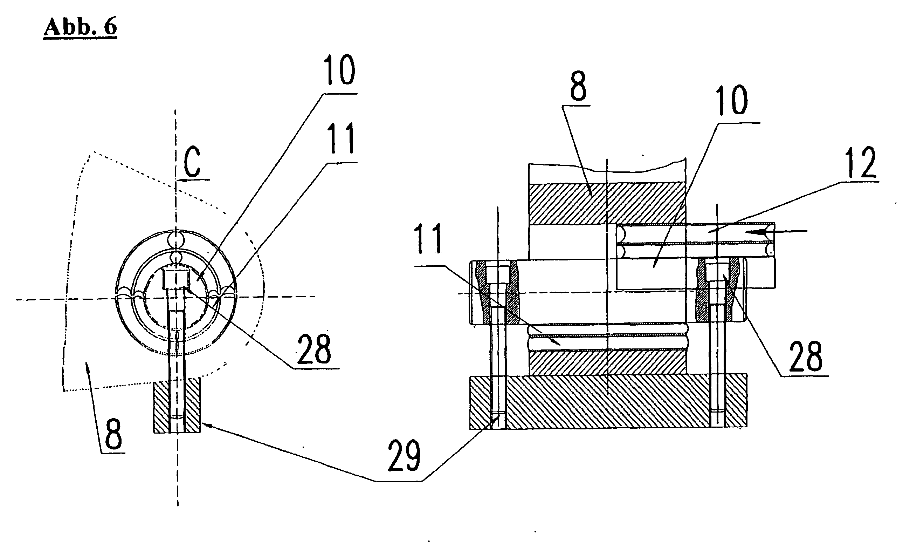

Nun ist es denkbar, daß die in Abb. 3, 4 beschriebene Bauweise für eine Montage beispielsweise wegen zu schwach dimensionierter Auflageflächen oder zu enger Platzverhältnisse ungeeignet ist. Somit bietet sich eine weitere Alternative an, die in Abb. 5 und 6 dargestellt ist. Wie im beschriebenen Fall wird die erfindungsgemäße Spannbuchse z.B. in der Montagehalle in der Regel zuerst in den Getriebeblock (4) montiert, ehe dieser auf den Maschinenträger (6) befestigt wird. Hierzu bedarf es einer zusätzlichen Montagevorrichtung (29). Diese besteht aus einem Haltebügel, welcher mit der Buchsenachse (10) verschraubt wird und sich gegen das Getriebeauge abstützt. Durch diese Krafteinleitung wird die Halbschale (11) mit der Achse (10) soweit vorgespannt, daß die obere Halbschale (12) eingeführt werden kann. Die Einleitung der Vorspannkraft kann, wie in Abb. 5 dargestellt, durch ein zusätzliches Hebegerät (z. B. hydraulischer Zylinder) erfolgen. Das gleiche kann auch wie in Abb. 6 direkt durch die Montageverschraubung (28) erreicht werden.

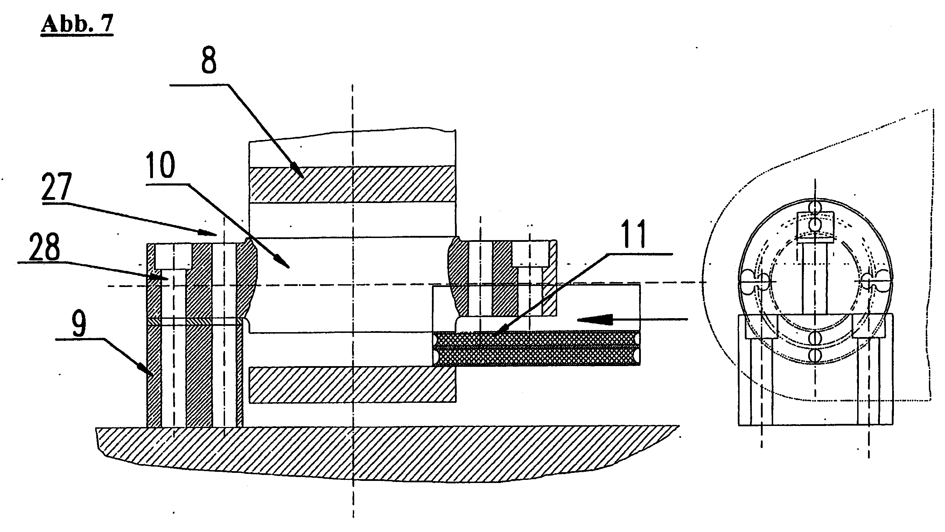

Ein weiterer Vorteil der Lagerung ist darin zu sehen, daß bei Montage (oder Demontage) auf der Windkraftanlage die Achse (10) nicht entfernt werden muß, sondern es muß nur der Ständer (9) auf einer Seite entfernt werden, so daß das Getriebe im Falle außergewöhnlicher Maßnahmen oder Vorfälle während der Montage (z.B. Windstoß) von der einseitig vorhandenen Achse noch gehalten werden kann. Somit kann auf zusätzliche Sicherungsmaßnahmen verzichtet werden. Abb. 7 gibt eine einfache Variante wieder, bei der die Achse (10) direkt auf dem Ständer angeschraubt ist. Hierbei besteht der Ständer nur aus einem Teil, auf dem die hier abgeflachte Achse (10) direkt aufgeschraubt ist. Die Montageverschraubung (28) ist in der Achse versenkt, wodurch es möglich ist, die obere Halbschale (12) wie bei der vorangehenden Variante, in die Konstruktion einzuführen. Diese Verschraubung dient nicht nur der Montage, sondern ist auch als Dauerverschraubung zur Übertragung der Betriebslasten vorgesehen.

Die für die erfindungsgemäßen Spannbuchsen verwendeten Elastomere, gegebenenfalls mit unterschiedlicher Härte, sind im Stand der Technik bekannt und in der einschlägigen Literatur hinreichend beschrieben. Vorzugsweise werden handelsübliche Naturkautschuke oder Kunststoffe eingesetzt. Beispiele für geeignete Elastomere sind: Naturkautschuk, Isopren-, Butadien-, Polynorbonen-, Chloropren-, Styrolbutadien-, Butyl-, Äthylenpropylen-, Nitril-, Polyurethan-, Acrylat-, Äthylenacrylat, Silicon- oder Fluor- Kautschuke bzw. Kunststoffe. Die für diese Erfindung verwendeten Elastomermaterialien bestehen vorzugsweise im wesentlichen aus einem Naturkautschuk, einem Naturkautschukderivat oder aus einem geeigneten elastischen polymeren Kunststoff oder Kunststoffgemisch. Die Elastomerschicht kann unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore, insbesondere 40 bis 80 Shore verwendet. Die Herstellung von Elastomeren unterschiedlicher Härte ist im Stand der Technik hinreichend beschrieben.

Die Halbbuchsen (15), (16) und (17) sind aus vorzugsweise harten, widerstandsfähigen aber in der Regel nicht zu spröden Materialien gefertigt. Dies sind vorzugsweise Metalle oder Metallegierungen, können aber auch in Einzelfällen Hartkunststoffe, Keramikmaterialien oder Carbonfasern sein, oder diese Stoffe zusätzlich enthalten. Als geeignete Metalle sind vor allem Eisen und Stähle, Chrom-Nanadium-Stähle, Leichtmetalle wie z.B. Aluminium, Titan, Zirkonium oder Tantal zu nennen oder auch Legierungen, die diese Metalle enthalten. Vorzugsweise finden Eisenbleche Verwendung.

Die Bleche sind je nach Größe und erforderlicher Belastbarkeit zwischen 2 und 8 mm dick, wobei die mittleren Bleche (17) vorzugsweise dicker als die äußeren Bleche sind. Die Dicke der Schalen der Spannbuchsen variiert je nach Größe der Anlage zwischen etwa 15 und 80 mm, vorzugsweise zwischen 25 und 55 mm. Das Lagerauge, welches die Buchsenachse (10) aufzunehmen hat, besitzt einen Durchmesser zwischen 60 und 200, insbesondere zwischen 80 und 180 mm. Die Gesamtdicke einer Spannbuchse variiert somit zwischen etwa 140 und 280 mm, vorzugsweise zwischen 180 und 250 mm. Die Länge der Spannbuchsen liegt, abhängig von der notwendigen Dicke der erforderlichen Belastbarkeit und eventueller konstruktiver Notwendigkeiten im Bereich zwischen 100 und 400 mm, vorzugsweise zwischen 200 und 350 mm.

Die angegebenen geometrischen Maße der Spannbuchsen gelten insbesondere für den Einsatz in Windkraftanlagen. Da aber, wie einleitend erwähnt, die Spannbuchsen auch in anderen angetriebenen Maschinen oder Anlagen, in denen entsprechende Kräfte, Drehmomente und Unwuchten bei Belastung bzw. während des Betriebes auftreten, einsetzbar sind, können besagte Maße von den hier angegebenen nach oben und / oder unten abweichen.

## Patentansprüche

1. Radial verspannbare Spannbuchse (7), bestehend aus einer unteren (11) und einer oberen (12) zylindrischen Halbschale, die, aufeinander liegend, eine zylindrische Vollschale mit einem zylindrischen Hohlraum zur Aufnahme der Spannbuchsenachse (10) bilden, wobei jede Halbschale (11), (12) zusammengesetzt ist aus einer äußeren Halbbuchse (16), einer inneren Halbbuchse (15), und die Zwischenräume zwischen den besagten Halbbuchsen weitestgehend mit Elastomermaterial (13), (14) von gleich oder verschieden dicken Schichten ausgefüllt sind,
**dadurch gekennzeichnet, daß** der Mittelpunkt des Radius (20) der inneren Halbbuchse jeder Halbschale identisch ist mit dem Mittelpunkt des Radius der Buchsenachse (10), und der Mittelpunkt des Radius der besagten äußeren Halbbuchse (21) jeder Halbschale exzentrisch versetzt ist entlang der senkrecht zur Berührungsfläche der beiden Halbschalen gedachten Achse (32), wodurch der Mittelpunktversatz (22) der entsprechenden Radien von der inneren zur äußeren Halbbuchse jeder Halbschale zunimmt und bezüglich zur jeweils anderen Halbschale entgegengesetzt ist, so daß der Durchmesser (31) und die Schalendicke (26) der Spannbuchse in Richtung der Achse (32) größer ist als der Durchmesser (30) und die Schalendicke (25) der Spannbuchse senkrecht zu dieser Achse.

2. Spannbuchse nach Anspruch 1, **dadurch gekennzeichnet, daß** sie zusätzlich eine oder mehrere Halbbuchsen (17) in jeder Halbschale aufweist, die zwischen der besagten oberen und unteren zylindrischen Halbschale angebracht sind, wobei die Zwischenräume zwischen den besagten Buchsen weitestgehend mit besagtem Elastomermaterial ausgefüllt sind, und der Mittelpunkt des Radius der besagten Zwischenhalbbuchsen (17) analog Anspruch 1 exzentrisch versetzt ist.

3. Spannbuchse nach Anspruch 2, **dadurch gekennzeichnet, daß** sie eine zusätzliche Halbbuchse (17) in jeder Halbschale aufweist.

4. Spannbuchse nach einem der Ansprüche 1 bis 3, **dadurch gekennzeichnet, daß** Aussparungen in den elastomeren Schichten (13) (14) vorhanden sind.

5. Spannbuchse nach Anspruch 4, **dadurch gekennzeichnet, daß** jede elastomere Schicht eine Aussparung (23, 24) aufweist.

6. Spannbuchse nach einem der Ansprüche 1 bis 5, **dadurch gekennzeichnet, daß** die Halbschalen unterschiedlich hart sind.

7. Verwendung von Spannbuchsen gemäß der Ansprüche 1 bis 6 zur Aufnahme von durch Bewegung oder Schwingungen erzeugten Kräften.

8. Verwendung von Spannbuchsen nach Anspruch 7 in Maschinenlagern.

9. Verwendung von Spannbuchsen nach Anspruch 8 als Getriebelager für Windkraftanlagen.

## Claims

1. Bearing bush (7) capable of being tensioned radially, comprising a lower cylindrical half shell (11) and an upper cylindrical half shell (12) which, when they lie on one another, form a cylindrical full shell having a cylindrical cavity for receiving the shaft (10) of the bearing bush, each half shell (11), (12) being composed of an outer half bush (16) and an inner half bush (15), and the spaces between the said half bushes being very substantially filled to a very large extent with elastomer material (13), (14) of layers having the same or different thicknesses,
**characterised in that** the centre point of the radius (20) of the inner half bush of each half shell is identical with the centre point of the radius of the bush shaft (10), and the centre point of the radius of the said outer half bush (21) of each half shell is eccentrically offset along the notional axis (32) running perpendicular to the contact surface of the two half shells, as a result of which the centre point offset (22) of the corresponding radii increases from the inner to the outer half bush of each half shell and is opposed thereto in the respectively other half shell such that the diameter (31) and the shell thickness (26) of the bearing bush are larger in the direction of the axis (32) than the diameter (30) and the shell thickness (25) of the bearing bush perpendicular to this axis.

2. Bearing bush according to Claim 1, **characterised in that** it has in addition one or more half bushes (17) in each half shell which are mounted between the said upper and lower cylindrical half shells, with the spaces between the said bushes being filled to a very large extent with the said elastomer material, and the centre points of the radii of the said intermediate half bushes (17) being eccentrically offset in a manner similar to Claim 1.

3. Bearing bush according to Claim 2, **characterised in that** it has an additional half bush (17) in each half shell.

4. Bearing bush according to one of Claims 1 to 3, **characterised in that** cut-outs are provided in the elastomer layers (13) (14).

5. Bearing bush according to Claim 4, **characterised in that** each elastomer layer has a cut-out (23, 24).

6. Bearing bush according to one of Claims 1 to 5, **characterised in that** the half shells have different hardness values.

7. Use of bearing bushes according to Claims 1 to 6 for taking up forces generated by movement or vibrations.

8. Use of bearing bushes according to Claim 7 in machine bearings.

9. Use of bearing bushes according to Claim 8 as gear bearings for wind turbines.

## Revendications

1. Coussinet de palier (7) pouvant être mis sous tension radialement, comprenant une demi-coque cylindrique inférieure (11) et une demi-coque cylindrique supérieure (12) qui, lorsqu'elles sont liées l'une sur l'autre, forment une coque complète cylindrique comportant une cavité cylindrique pour recevoir l'arbre (10) du coussinet de palier, chaque demi-coque (11), (12) étant constituée par un demi-coussinet externe (16) et par un demi-coussinet interne (15), et les espaces entre lesdits demi-coussinets étant remplis de façon très substantielle jusqu'à un degré très important par un matériau élastomérique (13), (14) constitué par des couches présentant les mêmes épaisseurs ou des épaisseurs différentes,
**caractérisé en ce que** le point central du rayon (20) du demi-coussinet interne de chaque demi-coque est identique au point central du rayon de l'arbre de coussinet (10), et le point central du rayon dudit demi-coussinet externe (21) de chaque demi-coque est décalé de façon excentrique suivant l'axe notionnel (32) qui court perpendiculairement à la surface de contact des deux demi-coques et en tant que résultat, le décalage de point central (22) des rayons correspondants augmente depuis le demi-coussinet interne jusqu'au demi-coussinet externe de chaque demi-coque et lui est opposé dans l'autre demi-coque respective de telle sorte que le diamètre (31) et l'épaisseur de coque (26) du coussinet de palier sont plus grands suivant la direction de l'axe (32) que le diamètre (30) et l'épaisseur de coque (25) du coussinet de palier perpendiculairement à cet axe.

2. Coussinet de palier selon la revendication 1, **caractérisé en ce qu'**il comporte en outre un ou plusieurs demi-coussinets (17) dans chaque demi-coque qui sont montés entre lesdites demi-coques cylindriques supérieure et inférieure, les espaces entre lesdits coussinets étant remplis jusqu'à un degré très important par ledit matériau élastomérique, et les points centraux des rayons desdits demi-coussinets intermédiaires (17) sont décalés de façon excentrique d'une manière similaire à la revendication 1.

3. Coussinet de palier selon la revendication 2, **caractérisé en ce qu'**il comporte un demi-coussinet additionnel (17) dans chaque demi-coque.

4. Coussinet de palier selon l'une des revendications 1 à 3, **caractérisé en ce que** des évidements sont ménagés dans les couches élastomériques (13) (14).

5. Coussinet de palier selon la revendication 4, **caractérisé en ce que** chaque couche élastomérique comporte un évidement (23, 24).

6. Coussinet de palier selon l'une des revendications 1 à 5, **caractérisé en ce que** les demi-coques présentent des valeurs de dureté différentes.

7. Utilisation de coussinets de palier selon les revendications 1 à 6 pour recevoir des forces qui sont générées par un déplacement ou des vibrations.

8. Utilisation de coussinets de palier selon la revendication 7 dans des paliers de machine.

9. Utilisation de coussinets de palier selon la revendication 8 en tant que paliers de transmission pour des turbines éoliennes.
